# FASCICULE DE BREVET EUROPEEN

(11) **EP 0 622 026 B1**
(45) Date de publication et mention de la délivrance du brevet: **19.03.1997**
(21) Numéro de dépôt: 93105076.9
(22) Date de dépôt: 27.03.1993
(51) Int. Cl.: A23G 9/26, A23G 9/22, A23G 9/14, A23G 3/20

(54) **Procédé et appareil de moulage de petits articles de confiserie glacée**
Formverfahren und -einrichtung für Gegenstände aus gefrorenen Süsswaren
Process and apparatus for moulding of small frozen confectionnary articles

(43) Date de publication de la demande: 02.11.1994
(73) Titulaire: FRISCO-FINDUS AG, CH-9400 Rorschach (CH)
(72) Inventeur: Cathenaut, Philip Igor, F-60000 Beauvais (FR)
(74) Mandataire: Archambault, Jean

(56) Documents cités:
- EP-A- 0 201 141
- EP-A- 0 219 646
- EP-A- 0 322 469
- WO-A-93/04592
- BE-A- 659 203
- FR-A- 1 539 694
- US-A- 1 948 147
- US-A- 3 770 460

## Description

L'invention concerne un procédé, un appareil et un ensemble de moulage pour la fabrication de petits articles de confiserie glacée présentant une partie convexe, notamment de sucettes de forme quasi-ellipsoïdale.

Beaucoup de petits articles de confiserie glacée avec ou sans bâtonnet sont fabriqués par moulage dans des moules, généralement métalliques. Ces moules peuvent être constitués d'une ou plusieurs parties et, dans ce dernier cas, les différentes parties du moule doivent être écartées ou séparées lors du démoulage des articles.

Pour fabriquer des sucettes glacées présentant une partie convexe, par exemple de forme quasi-ellipsoïdale, il faut donner dans la partie supérieure du moule une forme arrondie aux articles. Cette opération ne peut pas se faire au moyen des moules métalliques d'une seule pièce, puisque ces derniers conduisent nécessairement à la réalisation d'une face supérieure plane imposée par le remplissage de la composition glacée liquide. De plus, pour démouler les articles de ces moules métalliques, il est nécessaire que la cavité du moule ne comporte pas de partie supérieure rentrante, sinon l'article ne serait pas démoulable.

Selon FR-A-2535581, on a tenté de résoudre le problème de la fabrication d'articles de forme dite "indémoulable" au moyen de moules métalliques constitués de deux demi-coquilles profilées opposées articulées longitudinalement. Les demi-coquilles étant maintenues fermement l'une contre l'autre, on les remplit de composition glacée par une ouverture supérieure, par laquelle on insère un bâtonnet, on refroidit dans un tunnel de congélation à air froid, puis on réchauffe et enfin on ouvre les demi-coquilles pour libérer les articles moulés.

Une autre méthode, décrite dans FR-A-2502467, consiste à utiliser des demi-coquilles profilées en ronde bosse dans leur partie interne mais sans relief à l'extérieur, demi-coquilles qui s'insèrent longitudinalement dans un moule maître en restant en contact avec celui-ci. Le moule maître contenant les demi-coquilles est refroidi dans un bac à liquide frigorigène (saumure ou eau glycolée), ce qui représente un avantage par rapport au refroidissement en tunnel, plus coûteux. Cependant, le démoulage des articles nécessite d'extraire verticalement les deux demi-coquilles du moule maître, puis de les écarter latéralement pour libérer l'article. Ces opérations impliquent la mise en oeuvre de dispositifs mécaniques d'extraction et de démoulage relativement complexes et encombrants.

Un autre procédé, décrit dans FR-A-2265283, consiste à utiliser des moules de parois minces souples en caoutchouc qui peuvent être retournés comme des gants pour démouler les articles. Ce procédé présente cependant certains risques dans la mesure où les moules souples relativement fragiles sont au contact du fluide de refroidissement.

Un autre procédé, décrit par exemple dans EP-A-39511, par matriçage, comporte un moule unique. Une fois démoulée, la sucette est déformée entre deux matrices sous l'action de deux éléments de presse formant contre-moules. Ce procédé présente l'inconvénient de ne pas réaliser des formes très précises, comportant en particulier des bavures au niveau de la ligne de séparation entre les deux contre-moules.

Le procédé selon l'invention se propose de remédier aux inconvénients des procédés connus.

Il est caractérisé par le fait
que l'on place dans un moule maître métallique ouvert dont le fond constitue une demi-cavité et dont la partie supérieure est évasée vers le haut, un contre-moule complémentaire du moule maître, constitué d'une pièce métallique pleine de forme tronconique ajustée au moule maître, évidée en demi-cavité tournée vers le bas, de manière à former une cavité avec le moule maître, et percée d'une ouverture dans sa partie supérieure,
que l'on introduit une composition de confiserie glacée dans la cavité par la dite ouverture,
que l'on refroidit la dite composition,
que l'on place le cas échéant un bâtonnet par l'ouverture dans la composition partiellement durcie,
que l'on réchauffe le contre-moule, puis qu'on l'extrait du moule maître,
que l'on réchauffe le moule maître, puis que l'on démoule l'article que l'on évacue,
que l'on replace le contre-moule dans le moule maître et que l'on lave le moule maître et le contre-moule dans une station de lavage.

De préférence, on refroidit le moule maître et le contre-moule au contact du moule maître en les faisant cheminer dans un bac de liquide de congélation, par exemple de saumure ou d'eau glycolée, durant toutes les opérations précédant le réchauffage du contre-moule.

Dans un mode de réalisation particulier conduisant à des produits composites, on fait suivre l'opération de remplissage de la composition glacée par une étape d'aspiration de la composition encore liquide au centre de la cavité pour constituer une coquille, puis d'un second remplissage de l'espace libre par une seconde composition glacée et, dans le cas d'une sucette, préalablement à la pose du bâtonnet.
Ces opérations d'aspiration, puis de remplissage de l'espace libéré peuvent être répétées plusieurs fois, ce qui conduit à des produits stratifiés.

De préférence, dans le cas des sucettes, l'opération de pose du bâtonnet est suivie d'un remplissage de finition de l'espace proche de l'ouverture.

Une fois démoulés, les articles sont de préférence trempés dans de l'eau, ce qui leur confère un glaçage de surface protecteur, pouvant être également attractif. Ils peuvent en variante être trempés dans de la couverture chocolatée.

L'invention concerne également un appareil de fabrication de petits articles de confiserie glacée, notamment de forme quasi-ellipsoïdale,
caractérisé par le fait qu'il comprend
un ensemble de moulage constitué d'un moule maître et d'un contre-moule complémentaire,
une barre de support des moules maîtres, solidaire d'une chaîne de transport sans fin,
une barre de support des contre-moules, cheminant en même temps que la chaîne de transport sans fin et susceptible de s'écarter de celle-ci à l'extraction, puis sur son brin de retour,
des moyens de refroidissement de l'ensemble de moulage,
des moyens de remplissage de composition glacée dans l'ensemble de moulage,
le cas échéant, des moyens d'insertion d'un bâtonnet dans la composition glacée partiellement durcie,
des moyens de réchauffage des moules maîtres et des contre-moules,
un dispositif d'extraction verticale des contre-moules et des produits moulés et de remise verticale des contre-moules dans les moules maîtres vides,
une chaîne de transport sans fin pour l'évacuation des articles moulés et
des moyens de lavage des moules maîtres et des contre-moules.

Dans un mode de réalisation préféré, l'appareil comporte également des moyens d'aspiration de composition glacée encore liquide de manière à former une coquille et des moyens de remplissage d'autre composition glacée dans la coquille ainsi formée.

Dans un autre mode de réalisation préféré, l'appareil comporte en sus des moyens de glaçage et d'enrobage des articles démoulés.

L'invention concerne également un ensemble de moulage des articles de confiserie glacée, caractérisé par le fait qu'il est constitué:
d'un moule maître comportant une demi-cavité inférieure démoulable dans un sens vertical descendant par rapport à l'article, une paroi supérieure évasée vers le haut et un épaulement annulaire entre la demi-cavité inférieure et la paroi supérieure et
un contre-moule complémentaire du moule maître, démoulable dans un sens vertical ascendant par rapport à l'article, dont la partie extérieure coïncide parfaitement avec la paroi intérieure de la partie supérieure du moule maître, constitué d'une pièce métallique pleine de forme tronconique, évidée en demi-cavité tournée vers le bas, de manière à former la cavité de moulage avec le moule maître, et percée d'une ouverture dans sa partie supérieure, la dite pièce métallique comportant un chanfrein inférieur reposant sur l'épaulement du moule maître et des barrettes de préhension dans sa partie supérieure.

Le moule-maître supporte le contre-moule au moyen de l'épaulement à la limite de sa demi-cavité inférieure, lequel contre-moule coiffe ainsi l'article. De préférence, l'épaulement a un angle de dépouille déterminé de manière à être évasé vers le haut, et cet angle de dépouille correspond à une pente complémentaire du chanfrein inférieur du contre-moule, tout en ménageant un certain jeu entre le moule maître et le contre-moule.

Du fait de sa continuité, le moule maître sépare à la fois le produit et le contre-moule du fluide frigorigène. Par ailleurs, le contact entre la paroi intérieure supérieure du moule maître et la paroi extérieure du contre-moule assure le transfert thermique entre le fluide frigorigène et le produit.

L'invention sera mieux comprise au moyen de la description détaillée ci-après faite en regard des dessins annexés illustrant un mode de réalisation de l'invention donné à titre d'exemple.

Dans les dessins:
La figure 1 est un schéma général de l'appareil montrant les différents postes de fabrication d'une sucette glacée de forme quasi-ellipsoïdale,
les figures 2 à 13 illustrent schématiquement les différentes séquences de préhension du contre-moule et de l'article, et de réinsertion du contre-moule dans le moule maître, au moment du démarrage de l'appareil et en fabrication,
la figure 14 est une représentation de l'ensemble de moulage, des moyens de préhension du contre-moule et du bâtonnet et des moyens de support du contre-moule sur le brin de retour de la chaîne transporteuse et
la figure 15 montre un bâtonnet glacé obtenu selon le schéma de la figure 1 en vue et en coupe partielles.

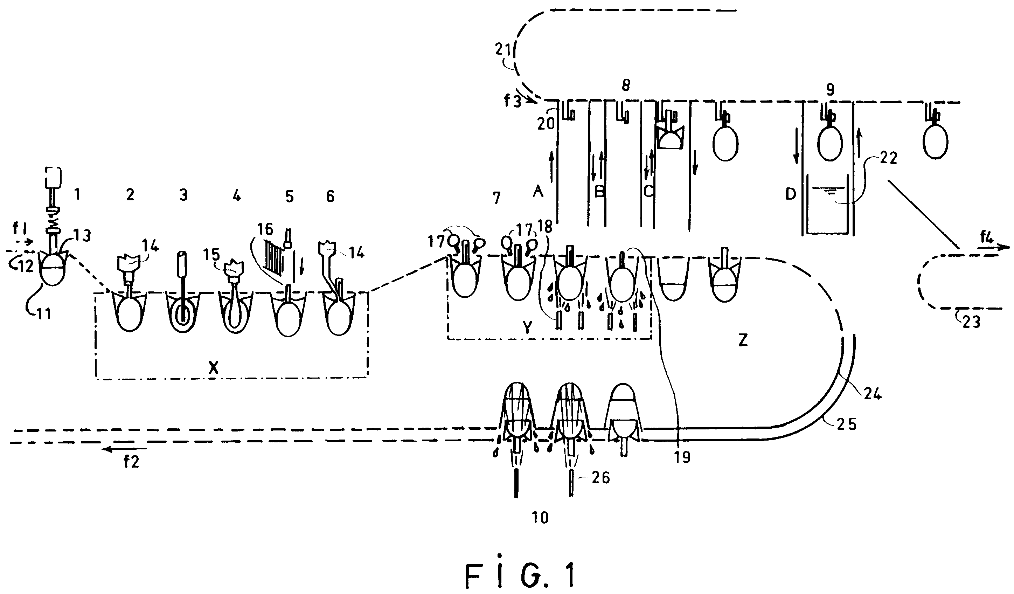

A la figure 1, l'appareil comprend une zone de congélation X, une zone de réchauffement superficiel Y et une zone hors congélation et sans moyens de réchauffement Z. La zone de congélation est constituée d'un bac contenant un fluide de refroidissement, par exemple une saumure au chlorure de calcium ou une eau glycolée. Pour des raisons de simplification de la représentation, les distances indiquées pour les différentes zones X, Y et Z ne correspondent pas aux distances réelles qui sont nécessaires aux transferts thermiques appropriés. De plus, certains éléments ne sont pas représentés pour des raisons de clarté: par exemple, on n'a représenté qu'un moule maître et qu'un contre-moule alors qu'en pratique on utilise des plaques portant des rangées de moules maîtres et des barres de support de rangées correspondantes de contre-moules. Ainsi, les plaques de moules maîtres sont articulées sur une chaîne transporteuse sans fin et constituent un convoyeur. De même, les barres de contre-moules constituent les maillons d'une chaîne sans fin parallèle dont on n'a représenté qu'une partie du brin de retour. Dans la suite de l'exposé, on utilisera les termes "moule maître" et "contre-moule" pour désigner des rangées. Dans le cas représenté, celui d'un premier type de machine, l'espace occupé par une barre d'extraction est le même que celui occupé par une rangée de moules. Ceci est une représentation simplifiée, car il existe des machines d'un deuxième type, où l'espace occupé par une barre d'extraction est plus large que celui occupé par une rangée de moules, et dans ce cas, non représenté à la figure 1, les dispositifs de monte et baisse doivent être distants de deux rangées de moules.

Un moule maître 11 chemine de gauche à droite suivant la flèche f1 par le mouvement de translation pas à pas de la chaîne sans fin 12, étant entendu qu'un pas est constitué par la distance entre 2 moules maîtres consécutifs et se présente successivement sous les postes 1 à 10.

Au poste 1, en tête de ligne et hors de la zone X, on applique verticalement le contre-moule 13 fermement contre le moule maître 11, par exemple au moyen d'un vérin pourvu d'une butée à ressort, de sorte que la face extérieure du contre-moule vienne complètement au contact de la face intérieure de la partie supérieure du moule maître 11. Moule maître 11 et contre-moule 13 constituent l'ensemble de moulage qui est au contact du fluide de refroidissement. Au poste 2, on remplit presque complètement la cavité formée entre le moule maître et le contre-moule avec une composition de confiserie glacée 14. Sous l'effet du fluide de refroidissement, la composition commence à se solidifier et à former une coquille, le centre restant encore liquide. En 3, on soutire le centre. Au poste 4, on introduit dans le coeur une autre composition glacée 15. En 5, le centre a atteint la viscosité nécessaire pour que le bâtonnet 16 puisse être introduit et reste en position. Au poste 6, on complète le remplissage du dessus de la cavité avec la composition 14.

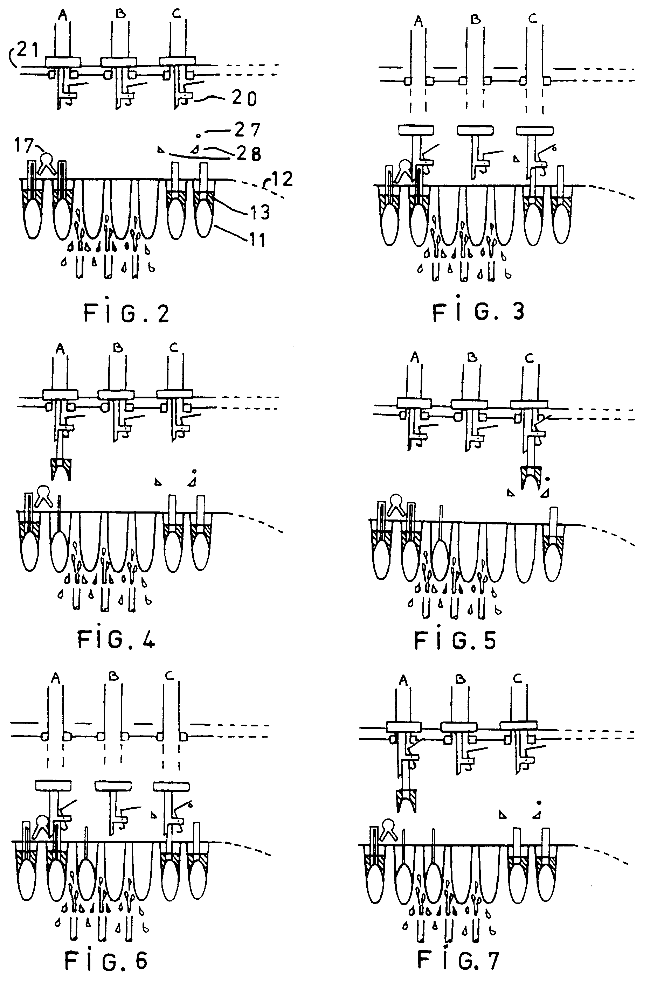

L'ensemble de moulage quitte alors la zone de congélation X pour passer dans la zone de réchauffement Y. En 7, le contre-moule est réchauffé en surface depuis le haut par les buses 17 délivrant un fluide chaud, par exemple de la vapeur et/ou de l'air chaud (la fourniture de chaleur d'origine électrique, par exemple par rayonnement ou induction pourrait également remplir ce rôle). En 8, les jets d'eau ou de saumure chaude sont projetés par les buses 18 à la surface du moule maître 11 depuis le bas et permettent le démoulage de la sucette 19. Dans le même temps, les trois dispositifs de monte et baisse A, B, et C viennent simultanément remonter le contre-moule 13 pour A, remonter la sucette 19 pour B et replacer le contre-moule 13 dans le moule maître 11 pour C par l'intermédiaire des pinces 20 solidaires de la chaîne sans fin 21, comme cela sera expliqué plus en détail ci-après en liaison avec les figures 2 à 8. La chaîne 21 avance de 2 pas à 2 pas et évacue la sucette 19 vers le poste 9 où elle est trempée dans une composition de couverture chocolatée ou de glaçage 22, par exemple de l'eau froide pour lui appliquer un glaçage de surface, par exemple au moyen d'un bac utilisé ordinairement pour appliquer une couverture chocolatée par l'intermédiaire du dispositif de monte et baisse D. La sucette enrobée est ensuite déchargée et évacuée suivant la flèche f4 par la bande transporteuse 23 vers un dispositif d'emballage où elle est enveloppée, par exemple en "flow-pack", cette opération n'étant pas représentée.

Dans la zone hors congélation Z constituée de l'air froid ambiant, l'ensemble de moulage comprenant le moule maître 11 et le contre-moule 13 correspondant est retourné sur le brin de retour de la chaîne 12 qui chemine dans la direction de la flèche f2. Le moule maître 11 repose sur le rail 24 cependant que le contre-moule 13 est supporté par une barre reposant sur le rail 25. Dans cette position, le moule maître, solidaire de la chaîne 12 entraîne le contre-moule 13 qui lui est associé tout en étant maintenu à distance de celui-ci. Au poste 10, des jets de liquide de nettoyage, de préférence chaud sont projetés vers le haut par les buses 26 et douchent à la fois le contre-moule 13 et le moule maître 11, de sorte que moule maître et contre-moule sont soigneusement nettoyés en une seule opération.

Les séquences d'extraction et de transfert du contre-moule 13 et de la sucette 19 au poste 8 sont expliquées en détail aux figures 2 à 13, illustrant le cas d'une machine du deuxième type précédent, pour laquelle la largeur d'une barre d'extraction est telle qu'il est nécessaire de disposer les barres d'extraction toutes les deux rangées de moules.

Avant démarrage de la fabrication, l'ensemble de moulage doit être prédisposé d'une certaine manière, à savoir que tous les moules maîtres 11 installés sur l'appareil sont équipés de leurs contre-moules 13 complémentaires sauf trois, celui en correspondance avec le monte et baisse B d'extraction de la sucette 19 plus deux de part et d'autre. En effet, puisque c'est à cette place que la sucette 19 est extraite du moule maître il ne doit y avoir aucun contre-moule 13 y faisant obstacle. Au tout premier démarrage de l'appareil, il faut établir manuellement cette correspondance entre les trois moules maîtres 11 sans contre-moules 13 et le monte et baisse B.

A la figure 2, la chaîne 12 vient d'avancer d'un pas. Elle est à l'arrêt. Il n'y a pas de contre-moule 13 au niveau du monte et baisse B. Les monte et baisse A, B et C, synchronisés entre eux, vont pouvoir descendre. Les premiers produits arrivent au niveau du monte et baisse A. Le monte et baisse C est équipé d'une barre 27 d'ouverture des pinces 20 ainsi que de guides 28 pour les contre-moules 13, barre d'ouverture 27 et guides 28 étant fixes.

Comme montré à la figure 3, le monte et baisse A descend et va saisir le contre-moule 13. Simultanément, le monte et baisse B descend et ne prend rien car il n'y a pas encore de produit à ce niveau. Le monte et baisse C descend également simultanément et ne repose rien car le contre-moule 13 est déjà installé dans le moule maître 11 correspondant. Les monte et baisse A, B et C remontent.

Comme indiqué à la figure 4, une fois les monte et baisse A, B et C en position haute, la chaîne 12 avance d'un pas et la chaîne 21 de deux pas, ce qui conduit à la disposition de la figure 5. La sucette 19 n'est pas encore placée sous le monte et baisse B tandis que le contre-moule 13 complémentaire vient se placer au niveau du monte et baisse C. Le moule maître 11 précédent a son contre-moule 13 complémentaire suspendu au niveau du monte et baisse C.

Les figures 6 et 7 montrent de nouveau l'extraction d'un contre-moule 13 et la repose du contre-moule extrait en figure 4. A la figure 6, on voit comment la barre d'ouverture 27 agit sur le levier 29 de la pince 20 à la descente du monte et baisse C pour l'ouvrir et libérer le contre-moule 13.

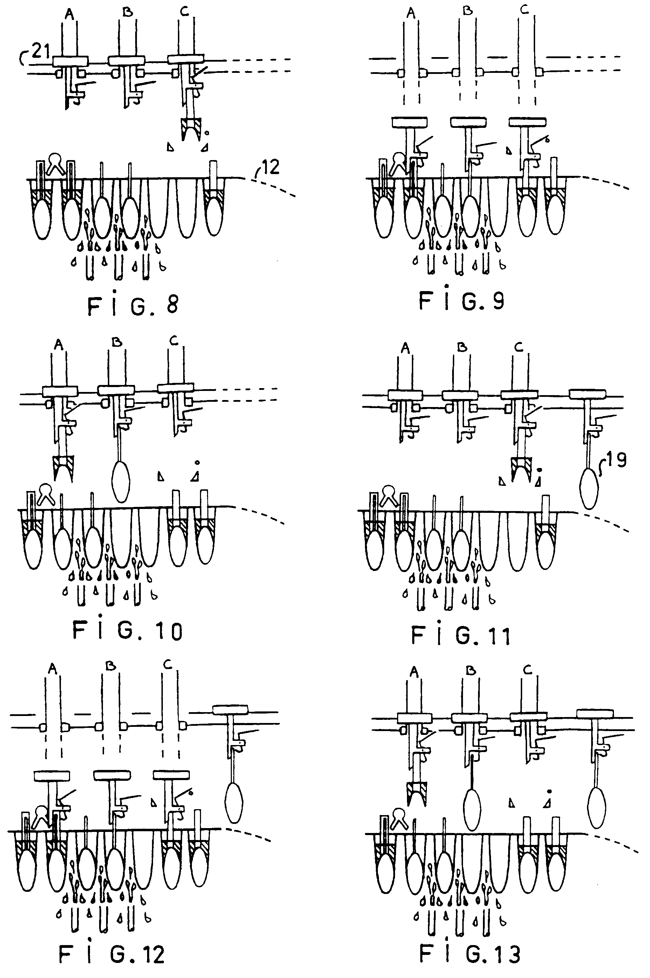

La figure 8 montre la disposition des moules maîtres 11 après une avancée d'un pas et des contre-moules 13 après une avancée de deux pas.

Les figures 9 et 10 montrent, en régime normal de production, la descente des monte et baisse A, B et C, l'extraction du contre-moule 13 et de la sucette 19 ainsi que la dépose du contre-moule 13 dans le moule maître 11.

La chaîne 12 avance d'un pas et la chaîne 21 de deux pas, ce qui conduit à la configuration de la figure 11.

Les figures 12 et 13 montrent le début d'un nouveau cycle alors que les produits sont véhiculés vers l'enrobage, puis l'enveloppage.

Dans le cas d'une machine du premier type précédent, où l'espace occupé par une barre d'extraction n'est pas plus large que celui d'une rangée de moules, il n'y a pas de rangée de moules entre les monte et baisse A et B ni entre les monte et baisse B et C. Les figures 6, 7 et 8 deviennent alors inutiles.

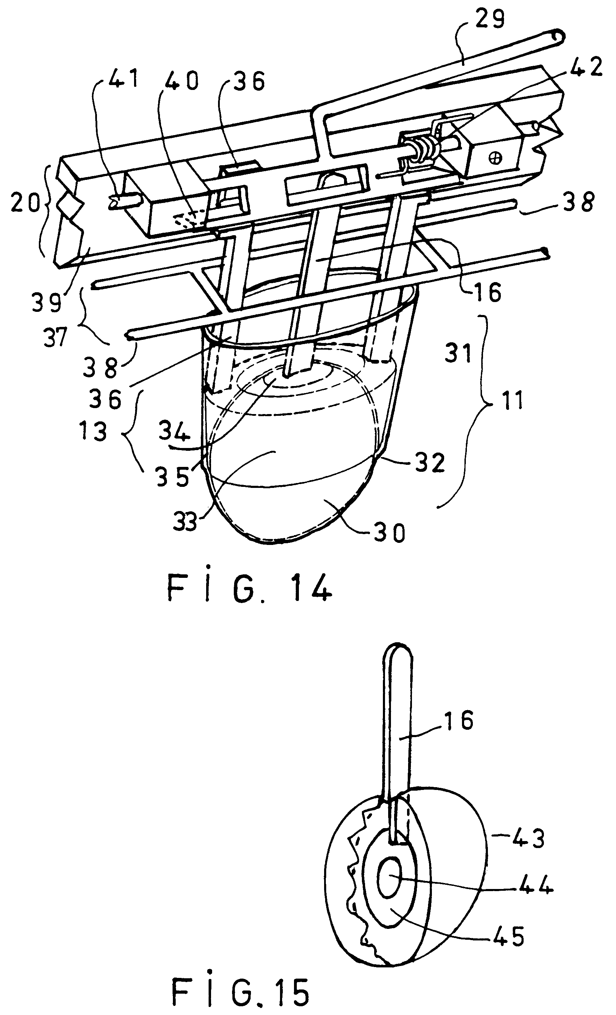

A la figure 14, l'ensemble de moulage constitué: d'un moule maître 11 comportant une demi-cavité 30 inférieure, démoulable dans un sens vertical descendant par rapport à l'article, une paroi 31 supérieure, évasée vers le haut et un épaulement annulaire 32 entre la demi-cavité 30 et la paroi 31 et d'un contre-moule 13 complémentaire du moule maître 11, démoulable dans un sens vertical ascendant par rapport à l'article, dont la partie extérieure coïncide parfaitement avec la paroi intérieure de la partie supérieure du moule maître 11.

Le contre-moule 13 est constitué d'une pièce métallique pleine de forme tronconique, évidée en demi-cavité 33 tournée vers le bas, de manière à former la cavité de moulage avec le moule maître 11, et percée d'une ouverture 34 dans sa partie supérieure, la dite pièce métallique comportant un chanfrein 35 inférieur reposant sur l'épaulement 32 du moule maître 11 et des barrettes 36 de préhension dans sa partie supérieure. Les barrettes 36 sont plus longues et plus épaisses que le bâtonnet 16. La barre 37, en gros fil d'acier inoxydable comporte des montants 38 latéraux (par rapport au sens de cheminement des moules maîtres 11), dont l'écartement est supérieur à l'épaisseur de la partie supérieure du contre-moule 13, si bien que, lorsque le contre-moule est renversé sur le brin de retour de la chaîne 12, il repose sur la barre 37 et est maintenu à distance du moule-maître associé sans en être complètement sorti, ce qui a pour conséquence que la chaîne 12 entraîne alors l'ensemble de moulage.

Le dispositif de préhension du contre-moule 13 et du bâtonnet 16 est une pince 20 ayant une partie fixe 39 et une mâchoire mobile 40, articulée autour de l'axe de pivotement 41 qui viennent d'abord enserrer les barrettes 36 du contre-moule 13 sous l'effet du ressort hélicoïdal 42, si un contre-moule 13 est présent, du fait qu'une barrette 36 est plus épaisse qu'un bâtonnet 16. Lorsque le contre-moule 13 est remonté par le monte et baisse A, il entraîne la barre 37, l'ensemble est transporté par la chaîne 21 et le contre-moule 13 est replacé dans le moule maître 11 correspondant par le monte et baisse C, après libération par ouverture de la pince 20 lorsque le levier 29 vient buter sur la barre 27, cependant que la barre 37 est reposée sur son rail de guidage. Lorsqu'il n'y a pas de contre-moule 13, c'est à dire au niveau du monte et baisse B, la pince prend le bâtonnet 16. Le levier 29 sert à ouvrir la pince 20 en venant buter sur une barre d'ouverture non représentée de manière à libérer le bâtonnet après son enrobage pour le décharger sur le convoyeur 23 vers l'enveloppage.

La sucette de la figure 15 peut être constituée, par exemple d'une couche 43 extérieure de sorbet de couleur jaune, au citron ou de sorbet de couleur rouge, à la fraise ou de sorbet de couleur orange, à l'orange ou encore de sorbet de couleur verte, à la pistache, la couche 43 étant enrobée d'un glaçage de surface à l'eau. En variante, la sucette peut être enrobée d'une couverture chocolatée, par exemple de chocolat blanc ou au lait. Le centre 44 et 45 peut être constitué d'une même crème glacée au chocolat au lait dans le cas d'un bâtonnet bi-parfum ou encore d'une crème glacée 44 au chocolat blanc et d'une crème glacée 45 au chocolat au lait dans le cas d'un bâtonnet tri-parfum.

Le procédé de l'invention peut être mis en oeuvre de manière optimale par utilisation d'une température de congélation basse dans la zone X, par exemple de -30 à -40°C, d'eau ou de saumure de réchauffage relativement froide, par exemple à 15-20°C au poste 8 et par le dosage des compositions de confiserie glacée à une température aussi basse que possible compatible avec le dosage, par exemple à 4-6°C, la zone Z étant simplement constituée d'air ambiant, relativement froid, par exemple à 14-15°C du fait de la proximité de la zone de congélation, pour une cadence de la chaîne 12 de 15 à 25 coups/min. De cette manière, on minimise les pertes au démoulage et on réduit les temps de congélation.

Dans la description précédente, on a représenté la fabrication de sucettes. On pourrait, de manière analogue, fabriquer des articles sans bâtonnet, et dans ce cas leur préhension et leur décharge pourrait s'effectuer au moyen de pinces à picot, c'est à dire d'outils comportant de petites pointes associées à une fourche entourant les pointes et effectuant un mouvement de translation descendant par rapport aux pointes. La chaîne 21 comporterait alors alternativement une pince à contre-moule 13 et une pince à picot. De tels articles pourraient avoir, par exemple la forme de fruits, par exemple de citron, de fraise ou d'orange.

Dans la description précédente, on a représenté un moule maître 11 et un contre-moule 13 associé. Bien entendu, les explications restent valables dans le cas de rangées constituées par une plaque contenant, par exemple 4 à 12 moules maîtres 11 et une barre supportant 4 à 12 contre-moules 13 sur le brin de retour de la chaîne 12. On pourrait, sans sortir du cadre de l'invention, réaliser la fabrication des articles au moyen d'une machine à carrousel pourvue des différents postes décrits précédemment au lieu d'une machine linéaire.

## Revendications

1. Procédé de fabrication de petits articles de confiserie glacée présentant une partie convexe, notamment de sucettes de forme quasi-ellipsoïdale, caractérisé par le fait que l'on place dans un moule maître métallique ouvert dont le fond constitue une demi-cavité et dont la partie supérieure est évasée vers le haut, un contre-moule complémentaire du moule maître, constitué d'une pièce métallique pleine de forme tronconique ajustée au moule maître, évidée en demi-cavité tournée vers le bas, de manière à former une cavité avec le moule maître, et percée d'une ouverture dans sa partie supérieure,
que l'on introduit une composition de confiserie glacée dans la cavité par la dite ouverture,
que l'on refroidit la dite composition,
que l'on place le cas échéant un bâtonnet par l'ouverture dans la composition partiellement durcie,
que l'on réchauffe le contre-moule, puis qu'on l'extrait du moule maître,
que l'on réchauffe le moule maître, puis que l'on démoule l'article que l'on évacue,
que l'on replace le contre-moule dans le moule maître et que l'on lave le moule maître et le contre-moule dans une station de lavage.

2. Procédé selon la revendication 1, caractérisé par le fait que l'on refroidit le moule maître et le contre-moule au contact du moule maître en les faisant cheminer dans un bac de saumure ou d'eau glycolée durant toutes les opérations précédant le réchauffage du contre-moule.

3. Procédé selon la revendication 1, de fabrication de produits composites, caractérisé par le fait que l'on fait suivre l'opération de remplissage de la composition glacée par une étape d'aspiration de la composition encore liquide au centre de la cavité pour constituer une coquille, puis d'un second remplissage de l'espace libre par une seconde composition glacée et, dans le cas d'une sucette, préalablement à la pose du bâtonnet.

4. Procédé selon la revendication 2, caractérisé par le fait que les opérations d'aspiration, puis de remplissage de l'espace libéré sont répétées plusieurs fois, ce qui conduit à des produits stratifiés.

5. Procédé selon la revendication 1, de fabrication de sucettes, caractérisé par le fait que l'opération de pose du bâtonnet est suivie d'un remplissage de finition de l'espace proche de l'ouverture.

6. Procédé selon l'une des revendications 1 à 5, caractérisé par le fait qu'une fois démoulés, les articles sont trempés dans de l'eau, ce qui leur confère un glaçage de surface attractif.

7. Appareil de fabrication de petits articles de confiserie glacée, notamment de forme quasi-ellipsoïdale,
caractérisé par le fait qu'il comprend
un ensemble de moulage constitué d'un moule maître et d'un contre-moule complémentaire,
une barre de support des moules maîtres, solidaire d'une chaîne de transport sans fin,
une barre de support des contre-moules, cheminant en même temps que la chaîne de transport sans fin et susceptible de s'écarter de celle-ci sur son brin de retour,
des moyens de refroidissement de l'ensemble de moulage,
des moyens de remplissage de composition glacée dans l'ensemble de moulage,
le cas échéant, des moyens d'insertion d'un bâtonnet dans la composition glacée partiellement durcie,
des moyens de réchauffage des moules maîtres et des contre-moules,
un dispositif d'extraction verticale des contre-moules et des produits moulés et de remise verticale des contre-moules dans les moules maîtres vides,
une chaîne de transport sans fin pour l'évacuation des articles moulés et
des moyens de lavage des moules maîtres et des contre-moules.

8. Appareil selon la revendication 7, caractérisé par le fait qu'il comporte également des moyens d'aspiration de composition glacée encore liquide de manière à former une coquille et des moyens de remplissage d'autre composition glacée dans la coquille ainsi formée.

9. Appareil selon la revendication 7, caractérisé par le fait qu'il comporte en sus des moyens de glaçage des articles démoulés.

10. Ensemble de moulage d'articles de confiserie glacée, caractérisé par le fait qu'il est constitué:
d'un moule maître comportant une demi-cavité inférieure démoulable dans un sens vertical descendant par rapport à l'article, une paroi supérieure évasée vers le haut et un épaulement annulaire entre la demi-cavité inférieure et la paroi supérieure et
un contre-moule complémentaire du moule maître, démoulable dans un sens vertical ascendant par rapport à l'article, dont la partie extérieure coïncide parfaitement avec la paroi intérieure de la partie supérieure du moule maître, constitué d'une pièce métallique pleine de forme tronconique, évidée en demi-cavité tournée vers le bas, de manière à former la cavité de moulage avec le moule maître, et percée d'une
ouverture dans sa partie supérieure, la dite pièce métallique comportant un chanfrein inférieur reposant sur l'épaulement du moule maître et des barrettes de préhension dans sa partie supérieure.

## Claims

1. Process for manufacturing small articles of ice confectionery having a convex part, in particular ice lollies, quasi-ellipsoidal in shape, characterized in that there is placed in an open metal master mould, the base of which forms a half cavity and the upper part of which widens out upwards, a countermould complementary to the master mould, consisting of a piece of solid metal frustoconical in shape adjusted to the master mould, recessed in a half-cavity facing downwards, so as to form a cavity with the master mould and having an opening made in its upper part,
that an ice confectionery composition is introduced into the cavity through the said opening,
that the said composition is cooled,
that a stick is optionally placed into the partially hardened composition through the opening,
that the countermould is heated and then removed from the master mould,
that the master mould is heated and the article is then demoulded and removed,
that the countermould is replaced into the master mould and that the master mould and countermould are washed at a washing station.

2. Process according to claim 1, characterized in that the master mould and the countermould in contact with the master mould are cooled by passing them through a tank of brine or glycol-containing water throughout all the operations preceding heating of the countermould.

3. Process according to claim 1, for manufacturing composite products, characterized in that the operation of filling with the ice composition is followed by a step in which the still liquid composition in the centre of the cavity is withdrawn by suction to form a shell, and there is then a second filling of the free space with a second ice composition and, in the case of an ice lolly, prior to insertion of the stick.

4. Process according to claim 2, characterized in that the operations of suction, followed by filling of the free space are repeated several times, which leads to layered products.

5. Process according to claim 1, for manufacturing ice lollies characterized in that the operation of inserting the stick is followed by final filling of the space close to the opening.

6. Process according to one of the claims 1 to 5, characterized in that, once demoulded, the articles are dipped in water to give them an attractive surface glaze.

7. Machine for manufacturing small articles of ice confectionery, in particular in quasi-ellipsoidal form, characterized in that it comprises
a moulding assembly consisting of a master mould and a complementary countermould,
a support bar for the master moulds, fixed to an endless chain conveyor,
a support bar for the countermoulds, travelling together with the endless chain conveyor and capable of separating from this on its return run,
means for cooling the moulding assembly,
means for filling the moulding assembly with the ice composition,
optionally, means for inserting a stick into the partially hardened ice composition,
means for heating the master moulds and countermoulds,
a device for vertically extracting the countermoulds and moulded products and for vertically replacing the countermoulds in the empty master moulds,
an endless chain conveyor for removing the moulded articles and
means for washing the master moulds and countermoulds.

8. Apparatus according to claim 7, characterized in that it also comprises means for withdrawing the still liquid ice composition by suction so as to form a shell and means for filling the shell thus formed with another ice composition.

9. Apparatus according to claim 7, characterized in that it comprises in addition means for glazing the articles removed from the mould.

10. Assembly for moulding articles of ice confectionery, characterized in that it consists of :
a master mould comprising a lower half-cavity which is demouldable in a downward vertical direction relative to the article, an upper wall widening out upwards and an annular shoulder between the lower half cavity and the upper wall
and
a countermould complementary to the master mould, which is demouldable in an upward vertical direction relative to the article, the outer part of which coincides perfectly with the inner wall of the upper part of the master mould, consisting of a solid metal piece with a frustoconical shape, recessed in a downward facing half-cavity, so as to form the moulding cavity with the master mould, and which has an opening made in its upper part, the said metal piece comprising a lower chamfer resting on the shoulder of the master mould and gripping bars in its upper part.

## Patentansprüche

1. Verfahren zur Herstellung kleiner Eis-Süßwaren mit einem konvexen Teil, insbesondere Stieleis mit quasi-ellipsoidischer Form,
dadurch gekennzeichnet,
daß in einer offenen, metallenen Hauptform, deren Boden einen Halbhohlraum bildet und deren oberer Teil sich nach oben erweitert, eine zur Hauptform komplementäre Gegenform angebracht wird, die aus einem Vollmetallstück mit an die Hauptform angepaßter Kegelstumpfform besteht und als nach unten gerichteter Halbhohlraum ausgeführt ist, so daß sie mit der Hauptform einen Hohlraum bildet, und durch deren oberen Teil sich eine Öffnung erstreckt, daß eine EisSüßwarenmischung durch die genannte Öffnung in den Hohlraum eingefüllt wird, daß die genannte Mischung gekühlt wird, daß ggf. ein Stiel durch die genannte Öffnung in die teilweise hartgewordene Mischung gesteckt wird, daß die Gegenform wieder erwärmt wird und dann aus der Hauptform entfernt wird, daß die Hauptform wieder erwärmt wird und dann die Süßware aus der Form genommen und entfernt wird, daß die Gegenform wieder in der Hauptform angebracht wird, und daß die Hauptform und die Gegenform in einer Reinigungsstation gesäubert werden.

2. Verfahren nach Anspruch 1, dadurch gekennzeichnet, daß die Hauptform und die mit der Hauptform in Kontakt befindliche Gegenform gekühlt werden, indem sie während aller Vorgänge vor dem Wiedererwärmen der Gegenform durch einen Behälter mit Salzlösung oder glykolhaltigen Wasser geschickt werden.

3. Verfahren nach Anspruch 1 zur Herstellung von kombinierten Produkten, dadurch gekennzeichnet, daß auf den Vorgang des Einfüllens der Eismischung ein Schritt des Absaugens der noch flüssigen Mischung aus der Mitte des Hohlraums folgt, um eine Hülle zu bilden, sodann ein zweites Befüllen des Leerraums mit einer zweiten Eismischung und im Falle von Stieleis das Einsetzen des Stiels.

4. Verfahren nach Anspruch 2, dadurch gekennzeichnet, daß die Vorgänge des Absaugens und dann des Befüllens des Leerraums mehrmals wiederholt werden, so daß Produkte mit Schichten entstehen.

5. Verfahren nach Anspruch 1 zur Herstellung von Stieleis, dadurch gekennzeichnet, daß auf den Vorgang des Einsetzens des Stiels ein Endbefüllen des Raums im Bereich der Öffnung folgt.

6. Verfahren nach einem der Ansprüche 1 bis 5, dadurch gekennzeichnet, daß die Süßwaren nach dem Ausformen in Wasser getaucht werden, wodurch sie eine schöne glatte Oberfläche erhalten.

7. Vorrichtung zur Herstellung kleiner Eis-Süßwaren, insbesondere mit quasi-ellipsoidischer Form, dadurch gekennzeichnet, daß sie
- eine Gesamtanordnung zum Formen, bestehend aus einer Hauptform und einer komplementären Gegenform,
- eine Trägerstange für die Hauptformen, die mit einer Endlosförderkette fest verbunden ist,
- eine Trägerstange für die Gegenformen, die mit der Endlosförderkette gleichzeitig läuft und sich auf ihrer Leerstrecke von dieser entfernen kann,
- Mittel zum Kühlen der Gesamtanordnung zum Formen,
- Mittel zum Einfüllen von Eismischung in die Gesamtanordnung zum Formen,
- ggf. Mittel zum Einsetzen eines Stiels in die teilweise hartgewordene Eismischung,
- Mittel zum Wiedererwärmen der Hauptformen und der Gegenformen,
- eine Vorrichtung zum senkrechten Herausziehen der Gegenformen und der geformten Süßwaren und zum senkrechten Rückführen der Gegenformen in die leeren Hauptformen,
- eine Endlosförderkette für den Abtransport der geformten Süßwaren, und
- Mittel zur Reinigung der Hauptformen und der Gegenformen umfaßt.

8. Vorrichtung nach Anspruch 7, dadurch gekennzeichnet, daß sie auch Mittel zum Ansaugen von noch flüssiger Eismischung dergestalt, daß eine Hülle entsteht, sowie Mittel zum Einfüllen von anderen Eismischungen in die so geformte Hülle aufweist.

9. Vorrichtung nach Anspruch 7, dadurch gekennzeichnet, daß sie zudem Mittel zum Glätten der ausgeformten Süßwaren aufweist.

10. Gesamtanordnung zum Formen von Eis-Süßwaren, dadurch gekennzeichnet, daß sie
- eine Hauptform mit einem unten befindlichen Halb-Hohlraum, die bezogen auf die Süßware senkrecht nach unten geleert werden kann, mit einer oberen Wand, die sich nach oben erweitert, und einem ringförmigen Absatz zwischen dem unten befindlichen Halb-Hohlraum und der oberen Wand, sowie
- eine zur Hauptform komplementäre Gegenform, die bezogen auf die Süßware senkrecht nach oben geleert werden kann, deren äußerer Teil vollkommen an der Innenwand des oberen Teils der Hauptform liegt, die aus einem Vollmetallstück mit Kegelstumpfform besteht und als nach unten gerichteter Halbhohlraum ausgeführt ist, so daß sie mit der Hauptform den Formungs-Hohlraum bildet, und durch deren oberen Teil sich eine Öffnung erstreckt, wobei das genannte Metallteil eine auf dem Absatz der Hauptform ruhende untere Abschrägung sowie in seinem oberen Teil Greifstangen aufweist, umfaßt.
